# EUROPEAN PATENT APPLICATION

(11) **EP 4 813 699 A1**
(43) Date of publication of application: **30.09.2026**
(21) Application number: 26166308.2
(22) Date of filing: 20.03.2026
(51) Int. Cl.: B60K 1/04, H01M 50/249, H01M 50/502, H01M 50/505

(54) **STORAGE BATTERY APPARATUS MOUNTING STRUCTURE FOR VEHICLE**

(30) Priority: 26.03.2025 JP 2025052321
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); MARUHASHI, Motokuni, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A storage battery apparatus mounting structure for a vehicle includes a battery (BT) disposed at a vehicle lower side relative to a vehicle cabin, equipment disposed at the vehicle upper side of the battery (BT), and a seat (60) disposed at the vehicle upper side of the equipment. Pieces of the equipment include a junction block (50) and a control unit (64). The pieces of equipment are electrically connected via a bus bar (66). At least a portion of the bus bar (66) is disposed in a space between the junction block (50) and the control unit (64).

## Description

### BACKGROUND

### Technical Field

The present disclosure relates to a storage battery apparatus mounting structure for a vehicle.

### Related Art

Japanese Patent Application Laid-Open (JP-A) No. 2020-173918 discloses a structure in which a storage battery apparatus including a storage battery module is disposed under a seat.

When a storage battery apparatus is disposed under a seat as in the structure recited in JP-A No. 2020-173918, a gap between the seat and the storage battery apparatus must be made small in order to assure plentiful space in a vehicle cabin. However, when the gap between the seat and the storage battery apparatus is made small, high-voltage components such as a bus bar and the like may interfere with nearby components.

### SUMMARY

An object of the present disclosure is to provide a storage battery apparatus mounting structure for a vehicle that may suppress interference between a bus bar and nearby components while assuring plentiful space in a vehicle cabin.

A storage battery apparatus mounting structure for a vehicle according to a first aspect includes: a battery disposed at a vehicle lower side relative to a vehicle cabin; items of equipment disposed at a vehicle upper side of the battery; and a seat disposed at the vehicle upper side of the items of equipment, wherein: the items of equipment include a junction block and a control unit and are electrically connected via a bus bar, and at least a portion of the bus bar is disposed in a space between the junction block and the control unit.

In the storage battery apparatus mounting structure for a vehicle according to the first aspect, the battery is disposed at the vehicle lower side relative to the vehicle cabin.

The equipment is disposed at the vehicle upper side of the battery, and the seat is disposed at the vehicle upper side of the equipment. Pieces of this equipment include the junction block and the control unit, and are electrically connected via the bus bar. At least a portion of the bus bar is disposed in the space between the junction block and the control unit. Thus, because the bus bar is disposed in the space between the junction block and control unit that have high stiffness, the bus bar may be protected even when a gap between the seat and the equipment is made small.

In a storage battery apparatus mounting structure for a vehicle according to a second aspect, in the first aspect, the junction block is provided with a casing that is electrically insulating.

In the storage battery apparatus mounting structure for a vehicle according to the second aspect, the casing of the junction block is electrically insulative. Therefore, even if the bus bar is subjected to vibrations or the like and makes contact with the casing of the junction block, short circuits may be suppressed.

In a storage battery apparatus mounting structure for a vehicle according to a third aspect, in the second aspect, a vehicle rear side of the casing is formed lower than a vehicle front side of the casing, and the control unit is disposed above a rear portion of the junction block.

In the storage battery apparatus mounting structure for a vehicle according to the third aspect, the casing of the junction block is formed to be lower at the vehicle rear side than at the vehicle front side, and the control unit is disposed above the rear portion of the casing. Therefore, an increase in height of the seat may be suppressed compared to a structure in which a control unit is disposed above a front portion of a junction block. Furthermore, because the height of the rear portion of the casing of the junction block is lowered, a gap in which the bus bar is disposed is more easily assured.

In a storage battery apparatus mounting structure for a vehicle according to a fourth aspect, in the second aspect or the third aspect: an upper face of the casing includes: a front side upper face portion configuring a vehicle front side of the upper face; a central upper face portion that is disposed rearward of and lower than the front side upper face portion; and a rear side upper face portion that is disposed rearward of and lower than the central upper face portion, the control unit is disposed above a region extending from the central upper face portion to the rear side upper face portion, and at least a portion of the bus bar is disposed between the control unit and the rear side upper face portion.

In the storage battery apparatus mounting structure for a vehicle according to the fourth aspect, the upper face of the casing is structured to include the front side upper face portion, the central upper face portion and the rear side upper face portion. Because the control unit is disposed above a region extending from the central upper face portion to the rear side upper face portion, the seat may be lowered in height compared to a structure in which a control unit is disposed above a front side upper face portion. Furthermore, because the bus bar is disposed between the control unit and the rear side upper face portion, when a downward load is applied from the seat to the control unit, the control unit may be braced by the central upper face portion of the casing. Thus, interference with the bus bar may be suppressed.

In a storage battery apparatus mounting structure for a vehicle according to a fifth aspect, in any one of the first aspect to the fourth aspect, a cover member is disposed at the vehicle upper side of the control unit.

In the storage battery apparatus mounting structure for a vehicle according to the fifth aspect, a load from the seat may be braced by the cover member.

According to a vehicle according to the present disclosure as described above, interference of a bus bar with nearby components may be suppressed even while plentiful space in a vehicle cabin is assured.

### BRIEF DESCRIPTION OF THE DRAWINGS

An exemplary embodiment of the present disclosure will be described in detail based on the following figures, wherein:
Fig. 1 is an exploded perspective view showing principal portions of a vehicle in which a storage battery apparatus mounting structure for a vehicle according to an exemplary embodiment is employed.
Fig. 2 is a side sectional diagram showing a magnification of principal portions of the storage battery apparatus mounting structure for a vehicle according to the exemplary embodiment.

### DETAILED DESCRIPTION

A storage battery apparatus mounting structure for a vehicle according to an exemplary embodiment is described with reference to the drawings.

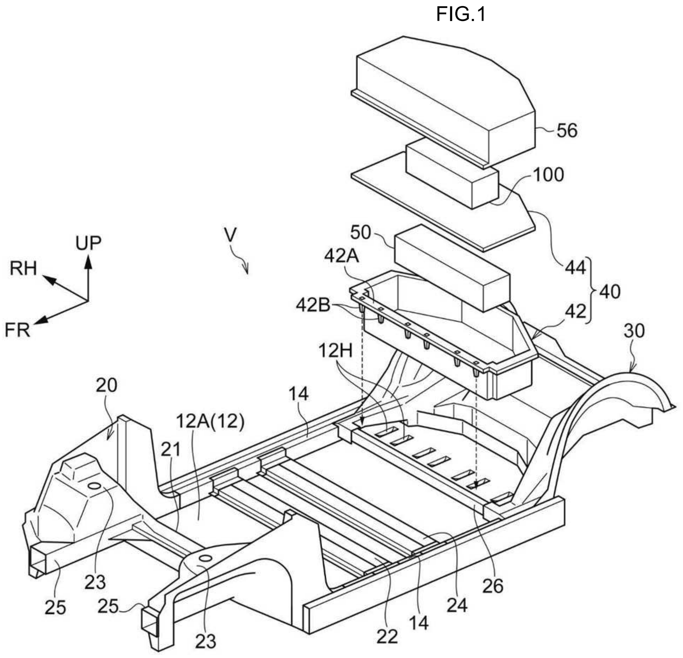

Fig. 1 is an exploded perspective view showing principal portions of a vehicle V in which the storage battery apparatus mounting structure for a vehicle according to the exemplary embodiment is employed. The arrow FR, arrow UP, and arrow RH in the drawings indicate, respectively, a vehicle front side, vehicle upper side and vehicle right side of the vehicle V. In the descriptions below, where the terms front, rear, upper, lower, left and right are used without being particularly specified, the same refer to front and rear in the vehicle front-and-rear direction, upper and lower in the vehicle vertical direction, and left and right in the vehicle left-and-right direction (the width direction).

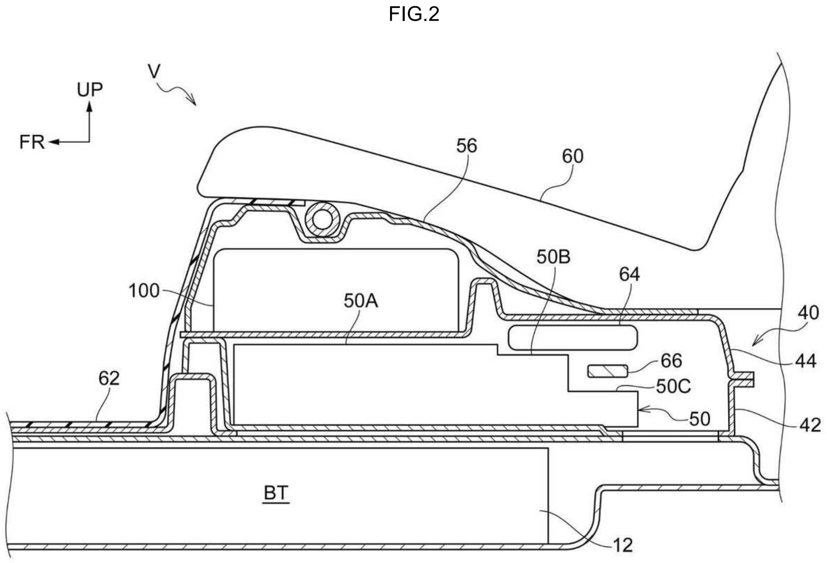

As shown in Fig. 1, a battery case 12 is provided at a central portion of a lower portion of the vehicle V. The battery case 12 is a case accommodating a battery BT (see Fig. 2). The battery case 12 is formed substantially in a box shape of a metal or a resin. As an example in the present exemplary embodiment, an upper face of an upper case 12A structuring an upper portion of the battery case 12 also functions as a vehicle cabin floor portion. Accordingly, a floor panel is not provided in the vehicle V according to the present exemplary embodiment.

Plural recess portions 12H are formed in a rear portion of the upper case 12A. The recess portions 12H are plurally formed to be spaced apart in the vehicle width direction.

A left and right pair of rockers 14 that extend in the vehicle front-and-rear direction are provided at both vehicle width direction sides of the battery case 12. The rockers 14 are framework members formed in substantially rectangular chamber shapes. The battery case 12 is attached to the rockers 14 by fastenings, which are not shown in the drawings.

A front end portion of each rocker 14 is connected to a front module 20. A rear end portion of each rocker 14 is connected to a rear module 30. The front module 20 and rear module 30 are respectively, for example, die-cast components that are integrally formed by casting.

The front module 20 is structured to include, for example, a dash portion 21, suspension towers 23, front side members 25 and so forth.

The dash portion 21 extends in the vehicle width direction and the vehicle vertical direction. The dash portion 21 divides space inside a vehicle cabin from space outside the vehicle cabin. The front side members 25 extend to the vehicle front side from both of vehicle width direction end portions of the dash portion 21, and structure load paths at times of frontal impact. The suspension towers 23 are provided as a pair at left and right and are respectively structured to be capable of supporting suspensions, which are not shown in the drawings.

A first cross-member 22 and a second cross-member 24 are provided at a vehicle front-and-rear direction central region of the rockers 14. The first cross-member 22 and the second cross-member 24 respectively extend in the vehicle width direction above the battery case 12, spanning between the left and right pair of rockers 14. Front vehicle seats, which are not shown in the drawings, are attached to the first cross-member 22 and the second cross-member 24.

A cross-member that is a third cross-member 26 is provided at a vehicle front-and-rear direction rear side region of the rockers 14. The third cross-member 26 extends in the vehicle width direction above the battery case 12, spanning between the left and right pair of rockers 14. The first cross-member 22, second cross-member 24 and third cross-member 26 are respectively fixed to the upper face of the battery case 12.

An equipment case 40 is disposed above the battery case 12. The equipment case 40 is provided with an equipment platform 42 and a cover member 44. The equipment platform 42 is a substantially box-shaped casing of which the vehicle upper side is open.

The cover member 44 is a sealed member that closes off the opening portion at the upper end of the equipment platform 42. The cover member 44 is fixed to peripheral end portions of the equipment platform 42 by fastening members that are not shown in the drawings.

A flange portion 42A projects to above the third cross-member 26 from a region at the vehicle front side of the equipment platform 42. In a state in which the flange portion 42A is placed on the third cross-member 26, the flange portion 42A is fixed to the third cross-member 26.

Protrusion protrusions 42B that project downward are plurally formed at a lower face of the flange portion 42A. The protrusion protrusions 42B are disposed to be spaced apart in the vehicle width direction. Lower ends of the protrusion protrusions 42B are disposed to oppose an upper face of the third cross-member 26.

The equipment platform 42 may be formed of a die-cast component, and may be an alternative material. For example, the equipment platform 42 may be formed of plate of aluminium, stainless steel or the like, and may be formed of a resin or the like.

Equipment is accommodated inside the equipment case 40. In the present exemplary embodiment, as an example of a piece of the equipment, a junction block 50 accommodating plural electrical components is disposed in the equipment case 40. The junction block 50 is placed inside the equipment platform 42 and is fixed to the equipment platform 42 by fastening members that are not shown in the drawings.

Electrical components such as, for example, relays, fuses, current sensors and the like are disposed in the junction block 50. The electrical components are electrically connected with one another via a wire harness, a bus bar or the like.

Auxiliary equipment 100 is disposed on an upper face of the cover member 44. The auxiliary equipment 100 is covered by an auxiliary equipment cover 56. The auxiliary equipment cover 56 is provided above the equipment case 40, and is a structure that supports a seat cushion of a rear vehicle seat from the vehicle lower side thereof. Another member may be interposed between the auxiliary equipment cover 56 and the seat cushion.

Fig. 2 is a side sectional diagram showing a magnification of principal portions of the storage battery apparatus mounting structure for a vehicle according to the exemplary embodiment. As shown in Fig. 2, a battery BT is disposed at the vehicle lower side relative to the vehicle cabin. Equipment including the above-described junction block 50, the auxiliary equipment 100 and a control unit 64 is disposed at the vehicle upper side of the battery BT.

A seat 60 is disposed at the vehicle upper side of the auxiliary equipment cover 56. The seat 60 includes the seat cushion and a seat back, and constitutes a rear seat of the vehicle V. The seat cushion supports the buttock area and thigh area of a vehicle occupant from the lower side. The seat back supports the back area of the vehicle occupant from the vehicle rear side.

A floor carpet 62 is disposed on an upper face of the battery case 12. A rear end of the floor carpet 62 is inserted between a front end of the seat cushion of the seat 60 and the auxiliary equipment cover 56, and is fixed in this state.

The control unit 64 is disposed at the vehicle upper side of a rear portion of the junction block 50. At least a portion of a bus bar 66 is disposed between the junction block 50 and the control unit 64.

More specifically, the junction block 50 is provided with an electrically insulative casing. A vehicle rear side of the casing is formed to be lower than a vehicle front side of the casing. As an example in the present exemplary embodiment, an upper face of the casing includes a front side upper face portion 50A, a central upper face portion 50B, and a rear side upper face portion 50C. The front side upper face portion 50A structures the vehicle front side of the upper face. The central upper face portion 50B is disposed rearward of and lower than the front side upper face portion 50A. The rear side upper face portion 50C is disposed rearward of and lower than the central upper face portion 50B. Accordingly, the upper face of the casing of the junction block 50 is formed substantially in a stepped shape whose vehicle rear side is disposed at the lower side relative to the vehicle front side.

The front side upper face portion 50A extends further to the vehicle rear side than a rear end of the auxiliary equipment 100. As an example in the present exemplary embodiment, the front side upper face portion 50A extends for at least half the length of the junction block 50 in the vehicle front-and-rear direction.

The central upper face portion 50B is disposed a little to the lower side relative to the front side upper face portion 50A. The control unit 64 is disposed at the vehicle upper side of the central upper face portion 50B. That is, the cover member 44 is disposed at the vehicle upper side of the control unit 64. The control unit 64 is a unit that conducts control of various kinds of equipment and is accommodated in the equipment case 40.

The control unit 64 is formed in a shape with a length in the vehicle front-and-rear direction that is longer than a length in the vehicle vertical direction. The control unit 64 is disposed above a region of the junction block 50 extending from the central upper face portion 50B to the rear side upper face portion 50C.

The control unit 64 may be supported directly by the central upper face portion 50B of the junction block 50, or may be supported by the central upper face portion 50B via a bracket or the like that is not shown in the drawings. A gap may be provided between the control unit 64 and the junction block 50, and the control unit 64 fixed to a different region.

Because the rear side upper face portion 50C is disposed at the lower side relative to the central upper face portion 50B, a space is formed between the rear side upper face portion 50C and the control unit 64. The bus bar 66 is disposed in this space.

The bus bar 66 is disposed to be predetermined distances apart from both the junction block 50 and the control unit 64, and is electrically connected to plural pieces of the equipment. That is, at least a portion of the bus bar 66 is disposed between the control unit 64 and the rear side upper face portion 50C.

As an example in the present exemplary embodiment, all of the bus bar 66 is disposed at positions that overlap with the control unit 64 and the junction block 50 in plan view, but this is not limiting. For example, a rear end of the bus bar 66 may extend further to the vehicle rear side than the control unit 64 and the junction block 50.

### - Operation -

Now, operation of the storage battery apparatus mounting structure for a vehicle according to the present exemplary embodiment is described.

In the vehicle V in which the storage battery apparatus mounting structure for a vehicle according to the present exemplary embodiment is employed, the battery BT is disposed at the vehicle lower side relative to the vehicle cabin. The junction block 50, control unit 64 and auxiliary equipment 100, which are equipment, are disposed at the vehicle upper side of the battery BT, and the seat 60 is disposed at the vehicle upper side of these pieces of equipment. Pieces of the equipment are electrically connected via the bus bar 66. At least a portion of the bus bar 66 is disposed in the space between the junction block 50 and the control unit 64. Thus, because the bus bar 66 is disposed in the space between the junction block 50 and control unit 64 that have high stiffness, the bus bar 66 may be protected even if a gap between the seat 60 and the equipment is made small. That is, both plentiful space in the vehicle cabin may be assured and interference between the bus bar 66 and nearby components may be suppressed.

In the present exemplary embodiment, the casing of the junction block 50 features electrical insulativity. Therefore, even if the bus bar 66 is subjected to vibrations or the like and makes contact with the casing of the junction block 50, short circuits may be suppressed.

In the present exemplary embodiment, the casing of the junction block 50 is formed to be lower at the vehicle rear side than at the vehicle front side, and the control unit 64 is disposed above a rear portion of the casing. Therefore, an increase in height of the seat 60 may be suppressed compared to a structure in which the control unit 64 is disposed above a front portion of the junction block 50.

Because the height of the rear portion of the casing of the junction block 50 is lowered, the gap in which the bus bar 66 is disposed is more easily assured.

In particular in the present exemplary embodiment, the upper face of the casing of the junction block 50 is structured to include the front side upper face portion 50A, the central upper face portion 50B and the rear side upper face portion 50C. Because the control unit 64 is disposed above a region extending from the central upper face portion 50B to the rear side upper face portion 50C, the seat 60 may be lowered in height compared to a structure in which the control unit 64 is disposed above the front side upper face portion 50A.

Furthermore, because the bus bar 66 is disposed between the control unit 64 and the rear side upper face portion 50C, when a downward load is applied from the seat 60 to the control unit 64, the control unit 64 may be braced by the central upper face portion 50B of the casing of the junction block 50. Thus, interference with the bus bar 66 may be suppressed.

In the present exemplary embodiment, the cover member 44 is provided above the control unit 64, and the auxiliary equipment cover 56 is provided above the cover member 44. Therefore, a load from the seat 60 may be braced by these cover members, and application of a load that is concentrated on the control unit 64 may be suppressed.

Above, a vehicle according to the present disclosure is described, but it will be clear that numerous embodiments are possible within a scope not departing from the gist of the present disclosure. For example, in the present exemplary embodiment as illustrated in Fig. 1, the front module 20 and the rear module 30 are die-cast components that are integrally formed by casting, but this is not limiting. That is, rather than a module structure, a dash cross-member, dash panel, front side members, suspension towers and the like may be formed as separate bodies.

As shown in Fig. 2, the present exemplary embodiment has a structure that includes the junction block 50, the control unit 64 and the auxiliary equipment 100 as the equipment disposed above the battery BT, but this is not limiting. For example, a structure is applicable in which the auxiliary equipment 100 is not provided above the battery BT.

In the present exemplary embodiment, the junction block 50, the control unit 64 and the like are disposed below the seat 60 structuring the rear seat, but this is not limiting. The junction block 50 and control unit 64 may be disposed below a passenger side front seat and a driver seat or the like. Alternatively, the junction block 50 and control unit 64 may be disposed below the rearmost row in a three-row arrangement of seats.

In the present exemplary embodiment, the bus bar 66 has a cross-sectional shape in a vehicle side view that is long in the vehicle front-and-rear direction, but this is not limiting and alternative shapes are applicable.

## Claims

1. A storage battery apparatus mounting structure for a vehicle, the structure comprising:
a battery (BT) disposed at a vehicle lower side relative to a vehicle cabin;
items of equipment (50, 64) disposed at a vehicle upper side of the battery (BT); and
a seat (60) disposed at the vehicle upper side of the items of equipment (50), wherein:
the items of equipment (50, 64) include a junction block (50) and a control unit (64) and are electrically connected via a bus bar (66), and
at least a portion of the bus bar (66) is disposed in a space between the junction block (50) and the control unit (64).

2. The storage battery apparatus mounting structure for a vehicle according to claim 1, wherein the junction block (50) is provided with a casing that is electrically insulating.

3. The storage battery apparatus mounting structure for a vehicle according to claim 2, wherein:
a vehicle rear side of the casing is formed lower than a vehicle front side of the casing, and
the control unit (64) is disposed above a rear portion of the junction block (50).

4. The storage battery apparatus mounting structure for a vehicle according to claim 2 or claim 3, wherein:
an upper face of the casing includes:
a front side upper face portion (50A) configuring a vehicle front side of the upper face;
a central upper face portion (50B) that is disposed rearward of and lower than the front side upper face portion (50A); and
a rear side upper face portion (50C) that is disposed rearward of and lower than the central upper face portion (50B),
the control unit (64) is disposed above a region extending from the central upper face portion (50B) to the rear side upper face portion (50C), and
at least a portion of the bus bar (66) is disposed between the control unit (64) and the rear side upper face portion (50C).

5. The storage battery apparatus mounting structure for a vehicle according to any one of claims 1 to 4, wherein a cover member (44) is disposed at a vehicle upper side of the control unit (64).
